# EUROPEAN PATENT SPECIFICATION

(11) **EP 3 751 051 B1**
(45) Date of publication and mention of the grant of the patent: **22.03.2023**
(21) Application number: 20179715.6
(22) Date of filing: 12.06.2020
(51) Int. Cl.: D21C 5/00, D21C 5/02, D21C 9/16

(54) **USE OF PROBIOTIC BACTERIA FOR INHIBITING THE DECOMPOSITION OF PEROXIDE IN THE DEINKING OF RECYCLED FIBER PULP**
VERWENDUNG VON PROBIOTISCHEN BAKTERIEN ZUR HEMMUNG DER PEROXIDZERSETZUNG BEI DER ENTFÄRBUNG VON RECYCLIERTEM FASERZELLSTOFF
UTILISATION DE BACTÉRIES PROBIOTIQUES POUR INHIBER LA DÉCOMPOSITION DU PEROXYDE LORS DU DÉSENCRAGE D'UNE PÂTE DE FIBRE RECYCLÉE

(30) Priority: 13.06.2019 EP 19179961
(43) Date of publication of application: 16.12.2020
(73) Proprietor: Wöllner GmbH, 67065 Ludwigshafen (DE)
(72) Inventor: MÄRZ, Barbara, 67065 Ludwigshafen (DE); ALLES, Jörg, 67065 Ludwigshafen (DE)
(74) Representative: Müller-Boré & Partner Patentanwälte PartG mbB

(56) References cited:
- EP-A1- 2 390 408
- WO-A1-91/14819
- CN-A- 108 425 259
- DE-A1- 19 620 952
- DE-C1- 4 410 663
- US-A1- 2010 126 680

## Description

The present invention relates to the use of compositions, comprising two or more species of probiotic bacteria, selected from the group consisting of *Bacillus subtilis, Bacillus pumilus, Bacillus licheniformis, Bacillus megaterium* and *Bacillus amyloliquefaciens,* for inhibiting the enzymatic decomposition of hydrogen peroxide (H₂O₂) in processes of deinking recycled fiber pulp. Further, the present invention relates to respective processes of deinking recycled fiber pulp.

Hydrogen peroxide is used in the deinking of recycled fiber pulp, e.g. recycled paper pulp, to increase the brightness of the pulp, as well as of the resulting final product. However, this activity can be reduced due to the decomposition of hydrogen peroxide mediated by enzymes, in particular catalases, derived from bacteria in the process solution. Such catalases are highly active enzymes, which can decompose up to 40000 peroxide molecules per second at a temperature of 0 °C. In this context, a recent study has identified a number of bacterial species in respective process solutions, including e.g. species of the genera *Tepidimonas* and *Chryseobacterium* which, in addition to decomposing hydrogen peroxide due to catalase expression, cause further process-related difficulties such as the formation of biofilms and slimes, as well as the reduction of the quality of the final products. Further, microbial activity can result in a decrease of pH and redox potential, in particular in connection with biofilm formation.

DE 19620952 discloses a process for improving whiteness in a flotation based deinking process, in which a slurry of old paper and alkali is bleached with peroxide in the presence of a chelating agent and a suspension of bacterias.

Thus, bacterial growth in the process solutions of deinking processes needs to be controlled or inhibited, in order to maintain suitable peroxide activity and to ensure smooth processing and a sufficient product quality. Usually, it is attempted to control bacterial growth through the addition of biocides such as dialdehydes or hemiacetals. However, such biocides often lack sufficient activity, e.g. to avoid formation of biofilms and slimes, and pose considerable health and environmental risks.

Therefore, the technical problem underlying the present invention is to provide efficient and safe means to decrease or avoid detrimental microbial activity, resulting in hydrogen peroxide decomposition, pH decrease and/or redox potential decrease, in a deinking process of recycled fiber pulp caused by detrimental bacteria in the process solutions.

The solution to the above technical problem is achieved by the embodiments characterized in the claims.

In particular, in a first aspect, the present invention relates to the use of a composition, comprising two or more species of probiotic bacteria, for inhibiting the enzymatic decomposition of hydrogen peroxide, in a process of deinking recycled fiber pulp, wherein said process uses hydrogen peroxide, wherein said two or more species of probiotic bacteria are selected from the group consisting of *Bacillus subtilis, Bacillus pumilus, Bacillus licheniformis, Bacillus megaterium* and *Bacillus amyloliquefaciens.*

The term "probiotic bacteria" has originally been used to refer to live microorganisms intended to provide health benefits when consumed, generally by improving or restoring the bacterial flora of the gut. However, as used herein, a broader definition can also be applied, said term relating to any live microorganisms that control or inhibit detrimental or unwanted microorganisms by competitively outgrowing the same in any biological or technical setting. Specifically, probiotic bacteria do not have a biocidal activity, but compete (e.g. over available nutrients and habitable space) with detrimental or unwanted microorganisms to finally outgrow and displace the same. In this manner, probiotic bacteria can abolish or reduce the production of detrimental enzymes such as catalases, as well as the formation of biofilms and slimes, thus preventing a decrease of pH and/or redox potential. Thus, a stable bacterial population that is compatible with a desired production process, e.g. the deinking of recycled fiber pulp, is established. Further, such probiotic bacterial populations are safe and do not compromise health or environment.

In specific embodiments, the composition used according to the present invention comprises three or more, four or more, or all five species of probiotic bacteria, selected from the group consisting of *Bacillus subtilis, Bacillus pumilus, Bacillus licheniformis, Bacillus megaterium* and *Bacillus amyloliquefaciens.*

The above species of probiotic bacteria, *i.e., Bacillus subtilis, Bacillus pumilus, Bacillus licheniformis, Bacillus megaterium* and *Bacillus amyloliquefaciens,* advantageously have the ability to colonize surfaces compactly without forming a biofilm and to assert themselves against other bacteria (cf. Example 2, below). Further, these microorganisms can also prevail against human-pathogenic bacteria and viruses.

In further embodiments, the composition used according to the present invention comprises one or more further species of probiotic bacteria, selected from the group consisting of species of the genus *Lactobacillus* (*Lactobacillus* spp.), *Lactococcus* spp., *Streptococcus* spp., *Propionibacterium* spp., *Enterococcus* spp., *Bifidobacterium* spp., *Bacillus* spp., *Sporolactobacillus* spp., *Micromonospora* spp., *Micrococcus* spp., *Rhodococcus* spp., *Escherichia* spp., and *Pseudomonas* spp..

More preferably, said one or more further species of probiotic bacteria is selected from the group consisting of *Lactobacillus acidophilus, Lactobacillus plantarum, Lactobacillus salivarius, Lactobacillus delbrueckii, Lactobacillus rhamnosus, Lactobacillus bulgaricus, Lactobacillus crispatus, Lactobacillus gasseri, Lactobacillus jensenii; Lactococcus lactis* (subsp. *lactis*); *Streptococcus thermophilus; Propionibacterium freudenreichii* (subsp. *shermanii*); *Enterococcus faecium, Enterococcus thermophilus; Bifidobacterium longum, Bifidobacterium infantis, Bifidobacterium bifidum; Bacillus coagulans, Bacillus thermophilus, Bacillus laterosporus, Bacillus pasteurii, Bacillus laevolacticus, Bacillus mycoides, Bacillus lentus, Bacillus cereus Bacillus circulans; Escherichia coli; Pseudomonas fluorescens,* and *Pseudomonas aeruginosa.*

In further specific embodiments, the composition used according to the present invention does not comprise any other species of probiotic bacteria.

In specific embodiments, in cases where the compositions used according to the present invention comprise bacteria of the genus *Bacillus* and/or the genus *Sporolactobacillus,* said bacteria are present in the form of endospores.

In a specific embodiment of the present invention, the compositions used according to the present invention comprise the species of probiotic bacteria, selected from the group consisting of *Bacillus subtilis, Bacillus pumilus, Bacillus licheniformis, Bacillus megaterium* and *Bacillus amyloliquefaciens,* independently in an amount of 10 to 50%, such as 10 to 30% or 20 to 30%, per species, with a total of 100% for all species.

In specific embodiments, the compositions used according to the present invention comprise the probiotic bacteria in an amount of 10⁶ to 10⁹ cfu (colony forming units) per gram of the composition. In further specific embodiments, said probiotic bacteria are used after a period of growth.

In some embodiments, the compositions used according to the present invention further comprise a prebiotic sugar. In this context, the term "prebiotic" as used herein relates to compounds that induce the growth or activity of beneficial microorganisms, *i.e.,* the probiotic bacteria according to the present invention. Respective prebiotic sugars are not particularly limited and are known in the art. In preferred embodiments, the prebiotic sugar is selected from the group consisting of monosaccharides, disaccharides, oligosaccharides (having 3 to 9 monosaccharide units) polysaccharides, and mixtures thereof, preferably from the group of galacto-oligosaccharides having 3 to 9 monosaccharide units and fructo-oligosaccharides having 3 to 9 monosaccharide units, wherein inulin is particularly preferred. Further sugars that can be used in this respect include glucose, saccharose (sucrose), and sugar mixtures such as components of CASO bouillon (tryptic soy broth) and molasses. The prebiotic sugar can be present in the compositions used according to the present invention in an amount of 0.01 to 10% (w/w).

The presence of prebiotic sugars in the compositions used according to the present invention supports growth of the probiotic bacteria and/or accelerates the germination of bacterial endospores, thus providing an additional advantage to the same vis-á-vis detrimental bacteria, many of which cannot metabolize such sugars.

Preferably, the compositions used according to the present invention are formulated as liquid compositions.

In specific embodiments, the uses of the present invention comprise preincubation of the used compositions prior to their addition to the process of deinking recycled fiber pulp. Preincubation can encompass preincubation in water, optionally in water containing added sugars, e.g. prebiotic sugars as defined above. This preincubation can result in a better establishment of the microorganisms in the system, since a transformation of the spores into the vegetative form of the bacteria is supported. Further, preincubation can be performed e.g. in tube reactors or stirred tanks. Further, preincubation can be performed for any suitable duration of time, e.g. for 1 to 5 hours.

Processes of deinking recycled fiber pulp for which the uses of the present invention are amendable are not particularly limited and are known in the art, provided such processes use hydrogen peroxide. Such deinking processes include wash deinking processes and flotation deinking processes, wherein flotation deinking processes are preferred. Respective deinking processes are known in the art.

The compositions used according to the present invention can be introduced into the process solution at any point in time prior to the addition of hydrogen peroxide. Preferably, said compositions are introduced into the process solution prior to a pulping process preceding said deinking process or immediately after said pulping process.

Recycled fiber pulps amendable to the present invention are not particularly limited and include recycled paper pulp.

In specific embodiments, the deinking process is performed in a deinking solution comprising
(a) sodium hydroxide (NaOH), preferably 0.2 to 1.5% (v/v) NaOH,
(b) hydrogen peroxide (H₂O₂), preferably 0.05 to 1% (v/v) H₂O₂, and
(c) soluble glass, preferably 0.1 to 2% (v/v) soluble glass, and
(d) optionally at least one of (i) one or more fatty acids and/or soaps, preferably 0.1 to 0.8% (v/v) of one or more fatty acids and/or soaps, (ii) one or more anionic and/or non-ionic surfactants, preferably 0.005 to 0.1% (v/v) of one or more anionic and/or non-ionic surfactants.

Such deinking process solutions typically have a pH in the range of 8 to 11, such as in the range of 8.5 to 10.5. Moreover, the deinking process may be carried out at room temperature, or at elevated temperatures in the range of 35 to 65 °C, such as 45 to 55 °C.

As used herein, the term "soluble glass" (also: water glass) refers to a mixture of solidified, glassy, amorphous, water-soluble sodium, potassium and lithium silicates or their aqueous solutions. Depending on whether predominantly sodium, potassium or lithium silicates are contained, it is called sodium water glass, potassium water glass or lithium water glass. Further, suitable fatty acids, soaps, and anionic or non-ionic surfactants are not particularly limited and are known in the art.

For example, fatty acids usable in the deinking process solutions are selected from palmitic acid, linoleic acid, oleic acid, and stearic acid. Examples of soaps for use in deinking process solution include the sodium soaps of the above fatty acids. Surfactants usable in the deinking process solution include, for example, silicon derivatives, anionic surfactants, and non-ionic surfactants.

In some embodiments, the deinking process solution further comprises at least one chelating agent, such as diethylenetriaminepentaacetic acid (DTPA), ethylenediaminetetraacetic acid (EDTA), or polyacrylates to enhance metal complex formation.

Moreover, in a further embodiment, the deinking process solution may contain one or more calcium-containing compounds, such as calcium chloride or limewater, to increase hardness of the solution, preferably in an amount of 0.2 to 2% (v/v).

According to a further embodiment of the above-defined use, the deinking process solution may contain one or more alkaline (earth) metal hydroxides, such as Ca(OH)₂ and Mg(OH)₂, for a mild alkalization and pH control, depending on the system specific pH.

According to the present invention, the deinking process solution may further contain a defoaming agent to control foam formation. Suitable compounds are known in the art and are preferably used in an amount of 0.005 to 0.2% (v/v).

In a second aspect, the present invention relates to a process of deinking recycled fiber pulp, comprising the step of supplying a composition, comprising two or more species of probiotic bacteria, to the process solution prior to the addition of hydrogen peroxide (H₂O₂) to said process solution, wherein said two or more species of probiotic bacteria are selected from the group consisting of *Bacillus subtilis, Bacillus pumilus, Bacillus licheniformis, Bacillus megaterium* and *Bacillus amyloliquefaciens.* In specific embodiments, said composition is supplied to the process solution after the addition of hydrogen peroxide.

In this aspect, the process of deinking recycled fiber pulp and/or the composition comprising one or more species of probiotic bacteria are preferably as defined above for the first aspect of the present invention.

Contrary to the general expectation in the technical field, the present invention is based on the surprising and unexpected fact that probiotic bacteria are not only viable in common deinking solutions, but can also exert their advantageous effects in terms of competitively outgrowing detrimental bacteria and, thus, prevent the generation of enzymes decomposing hydrogen peroxide, such as catalases, as well as the formation of biofilms and slimes. This is achieved in a safe, non-toxic and environmentally friendly manner.

The figures show:
Figure 1:
   Inhibition of catalase production after addition of probiotics to original water (dilution water DIP and clear filtrate).
Figure 2:
   Inhibition of catalase production after addition of probiotics to a sterile dilution water matrix (DIP).
Figure 3:
   Inhibition of catalase production after addition of typical microorganisms (no probiotics) to a sterile dilution water matrix (DIP).
Figure 4:
   Deposit formation test performed by microplate test method in a dilution water matrix with or without added probiotics, detail.
Figure 5:

   Deposit formation test performed by microplate test method in a clear filtrate water matrix (without former added probiotics) with or without added probiotics.
Figure 6:
   Deposit formation test performed by microplate test method in a clear filtrate water matrix (without former added probiotics) with or without added probiotics, detail.
Figure 7:
   Influence of H₂O₂ (low concentration) to typical microorganisms in the original dilution water (DIP).
Figure 8:
   Influence of H₂O₂ (low concentration) to probiotics former added to the original dilution water (DIP).
Figure 9:
   Influence of H₂O₂ (high concentration) typical microorganisms in the original dilution water (DIP).
Figure 10:
   Influence of H₂O₂ (high concentration) to probiotics in the original dilution water (DIP).
Figure 11:
   Influence of H₂O₂ (high concentration) to microorganisms in the original dilution water (DIP), after direct addition of probiotics.
Figure 12:
   Influence of H₂O₂ (high concentration) to probiotics in the original dilution water (DIP), after direct addition of probiotics.
Figure 13:
   BOD 5 of dilution water with former added probiotics compared to the BOD 5 of clear filtrate water without former added probiotics, influence of H₂O₂ on the BOD value.
Figure 14:
   Stabilisation of pH values during practical trials in three different DIP plants.
Figure 15:

   Representation of different germ number development within 48h in complex sugar mixtures (Caso Bouillon/ Tryptic soy and molasses).
Figure 16:
   Degradation of peroxide within 60 min after pre-enrichment of the probiotics over a period of 1-5h in DIP water (additive: Caso Bouillon 10%).
Figure 17:
   Degradation of peroxide within 60 min after pre-enrichment of the bacteria (*Bacillus subtilis, Escherichia coli, Pseudomonas fluorescens*) in DIP water plus Caso Bouillon 10% (additive: Caso Bouillon 10%).
Figure 18:
   Degradation of peroxide within 60 min after pre-enrichment of probiotics in water over a period of 1-5h (additive: Caso Bouillon 10%).
Figure 19:
   Catalase: degradation of peroxide within 60 min after pre-enrichment of the bacteria (*Bacillus subtilis, Escherichia coli, Pseudomonas fluorescens*) in DIP water plus Caso Bouillon 10% (additive: Caso Bouillon 10%).

The present invention will be further illustrated by the following example without being limited thereto.

### Examples

### Example 1:

### Probiotics and Catalase Activity

### Method:

Catalase activity was determined as titration of added H₂O₂ in a standard system. The titration started after addition of H₂O₂ and was followed up to 60min. Tests were performed under stirring and at 40 °C.

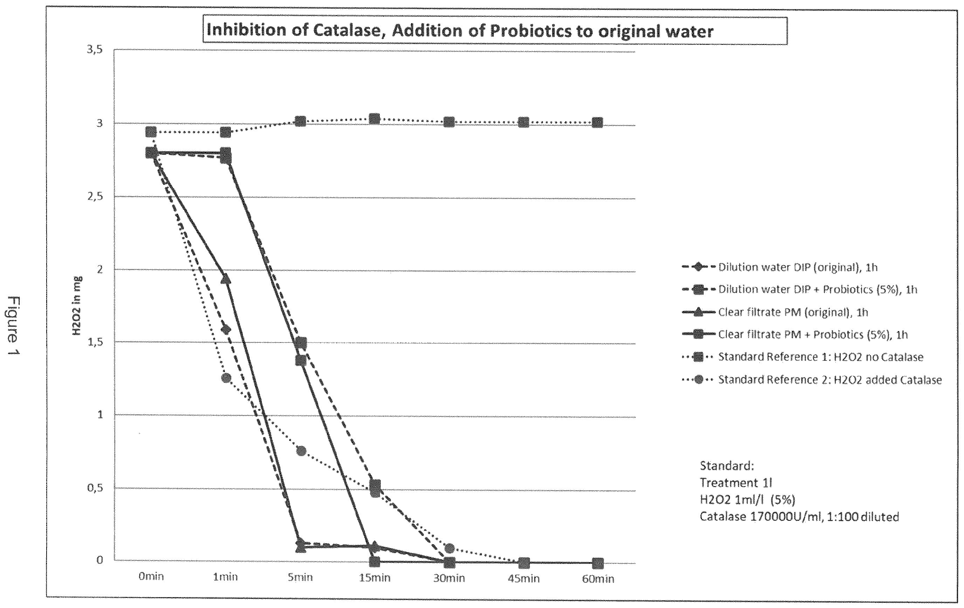

A strong decrease of H₂O₂ showed a strong activity of catalase. To the following results a reference line is added to show a typical development with or without catalase activity (standard reference 1 and 2, Figs. 1 to 3)

The following tests were performed with original waters of a paper mill.
a) Dilution water of the deinking System
b) Clear filtrate of the paper machine

To point out the influences of probiotics directly some trials were performed with sterile water samples (used as a test matrix) and added bacteria or probiotics.

### Test 1:

Dilution water of the deinking system (treatment with probiotics on site) was directly compared to a clear filtrate of the paper machine itself (without probiotics treatment). The trial was repeated with a direct addition of probiotics (cf. the graphs in Fig. 1).

As a result, both waters showed a typical content of catalase. This can be explained by the high contents of aerobic bacteria (10⁶ up to 10⁷ cfu/ml) after transportation. The time between transportation and start of the trials increased the growth time, leading to high cell numbers and a high content of catalase in the water.

An addition of probiotics directly to the water showed a significate delay in reduction of added H₂O₂, indicating that there is a delay in catalase production.

Therefore, the following trials were made with sterile water as a matrix and directly added bacteria or probiotics.

### Test 2:

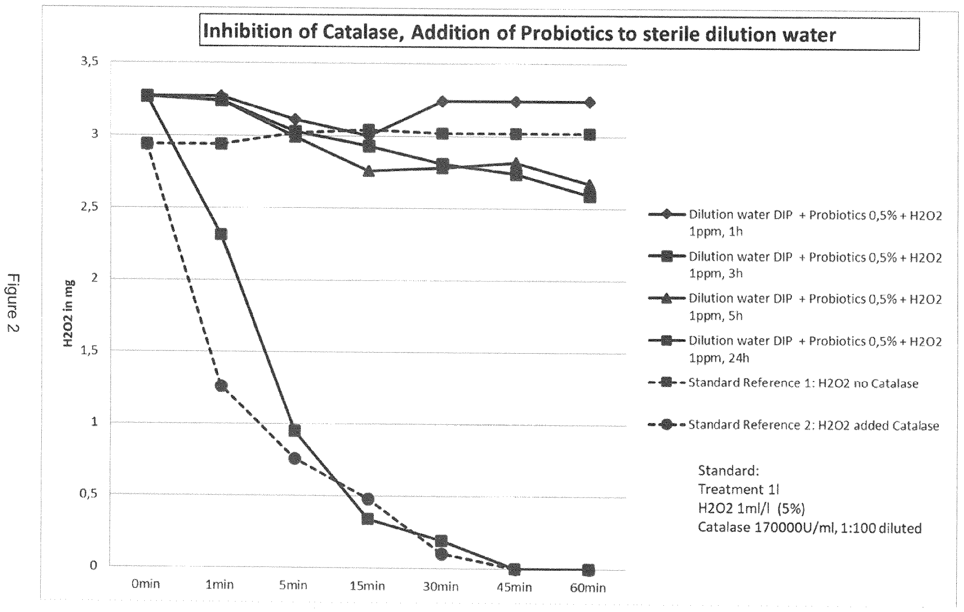

Dilution water of the deinking system (sterile), probiotics added (Fig. 2).

Added probiotics showed from the beginning a very weak catalase production (Fig. 2). This effect will last over 5h. After a growth period of 24h the catalase production will increase.

The tests were performed in a static system. That will have a strong influence on the development of catalase production and it will lead to an enrichment of the enzyme. The test was performed in addition with typical bacteria of an industrial water system.

### Test 3:

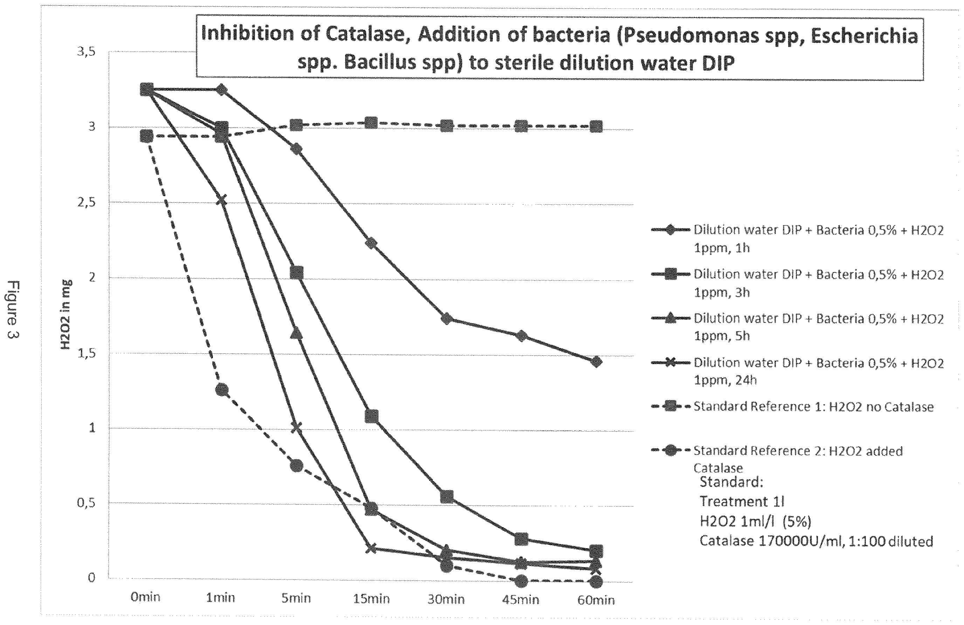

Dilution water of the deinking system (sterile), bacteria added (Fig. 3).

Added bacteria (mixture is typical for water-borne microorganisms in industry) showed from beginning on a very strong catalase production (Fig. 3). Maximum levels were obtained after 3h only.

### Summary:

The present tests showed that probiotics need more time to produce catalase.

The influence in the treated system is important: (i) there will be a reduced level in the system, (ii) a certain change in water will keep the probiotics to the early stage with a minor catalase production, and (iii) maximum production rate of catalase might not be reached. Therefore, the amount of catalase will be lower compared to untreated water.

In conclusion, probiotics help to stabilize H₂O₂ while producing a lower amount of catalase in the beginning of growth.

### Example 2:

### Deposit formation with or without addition of probiotics, in a dilution water deinking and a clear water of a paper machine

### Method:

Deposit formation was observed in a microplate test system. Well plates (12 wells) were filled with a process water / nutrients / water solution, and inoculated at room temperature under agitation for at least 48h. After pouring out the test solution, wells were moderately rinsed with tap water and afterwards stained with crystal violet.

The test formulation contained 20% of water to be tested (cf. Table 1), 10% Caso Bouillon (sterile) and 70% water (sterile). Probiotics or H₂O₂ were added as indicated, triple performance. Growth at room temperature (20-25°C), rotation 135rpm, Incubation time: 48h.

### Results:

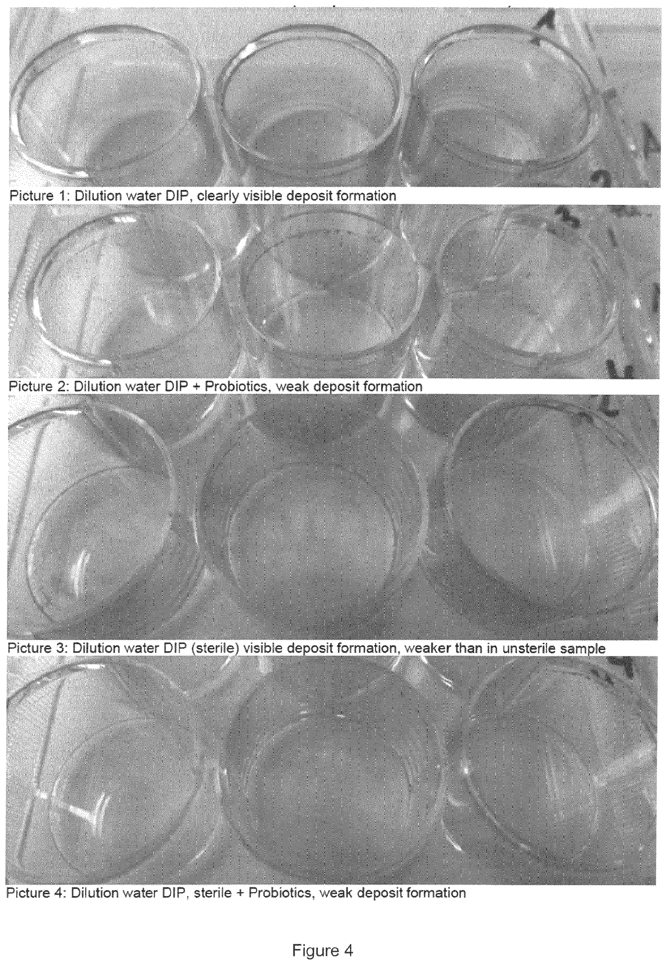

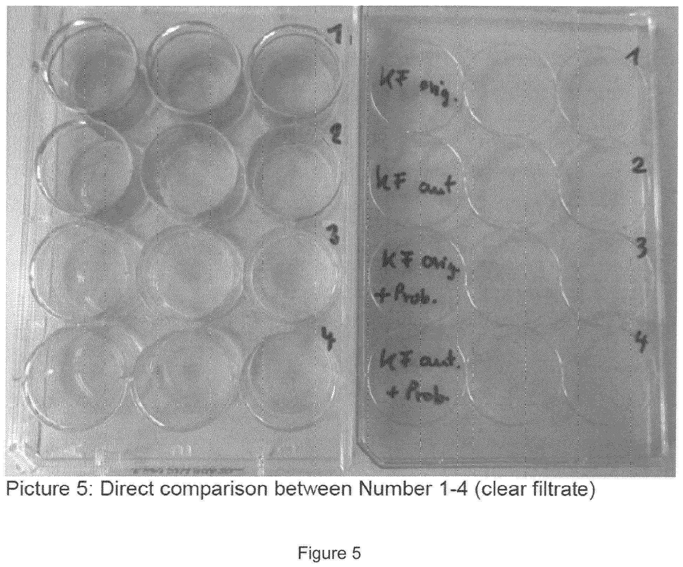

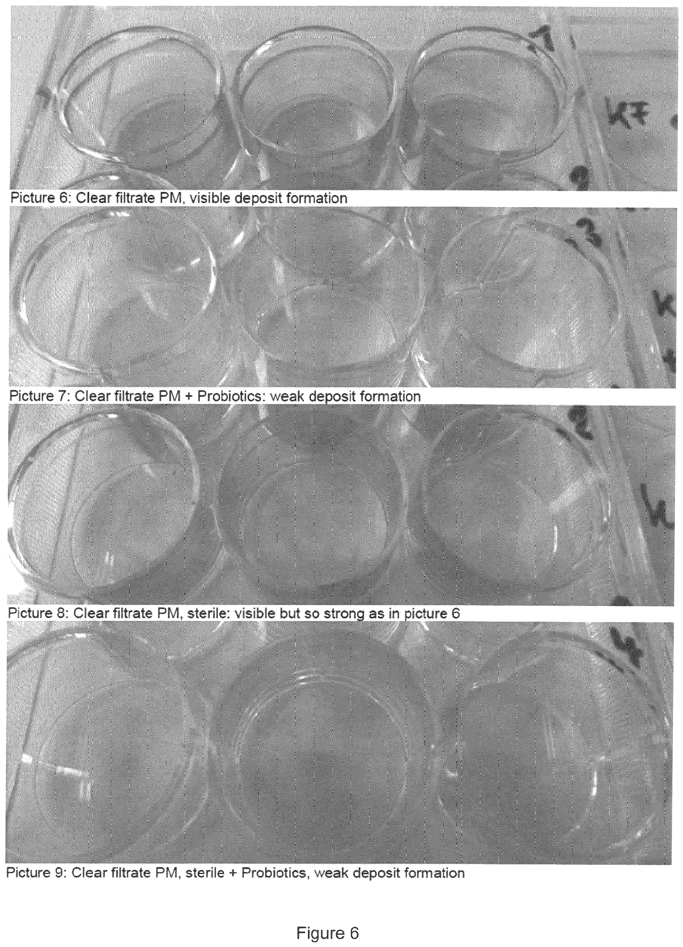

Results are shown in the below Tables 1 and 2, as well as in Figures 4 to 6.

**Table 1: Results dilution water DIP, previously treated with probiotics**

| **Water Type** | **Addition** | **Result** |
|---|---|---|
| Number 1: Dilution water DIP | | Deposit clearly visible |
| Number 2: Dilution water DIP, sterile | | Deposit visible, weaker |
| Number 3: Dilution water DIP | Probiotics (1%) | **No or weakly deposits** |
| Number 4: Dilution water DIP, sterile | Probiotics (1%) | **No or weakly deposits** |
| Number 5: Dilution water DIP | H2O2 (100ppm) | Deposit visible |
| Number 6: Dilution water DIP, sterile | H2O2 (100ppm) | Deposit weakly visible |
| Number 7: Dilution water DIP | H2O2 (100ppm) | **No deposits** |
| | Probiotics (1%) | |
| Number 8: Dilution water DIP, sterile | H2O2 (100ppm) | **No deposits** |
| | Probiotics (1%) | |

**Table 2: Results clear filtrate, no previous treatment with Probiotics**

| **Water Type** | **Addition** | **Result** |
|---|---|---|
| Number 1: Clear filtrate PM | | Deposit clearly visible |
| Number 2: Clear filtrate PM, sterile | | Deposit visible, weaker |
| Number 3: Clear filtrate PM | Probiotics (1%) | **No or weakly deposits** |
| Number 4: Clear filtrate PM, sterile | Probiotics (1%) | **No or weakly deposits** |
| Number 5: Clear filtrate PM | H₂O₂ (100ppm) | Deposit visible |
| Number 6: Clear filtrate PM, sterile | H₂O₂ (100ppm) | Deposit weakly visible |
| Number 7: Clear filtrate PM | H₂O₂ (100ppm) | **No deposits** |
| | Probiotics (1%) | |
| Number 8 Clear filtrate PM, sterile | H₂O₂ (100ppm) | **No deposits** |
| | Probiotics (1%) | |

As a result, deposits in the DIP (deinking) system were mainly formed by bacteria (biofilm or slime). The same result was obtained with clear filtrate, indicating that also in the PM (paper machine) the main reason for slime is the microbial load of the system. There is an indication that the deposits may be strengthened by the chemical components (weaker but visible formation of deposits in sterile process waters).

After addition of probiotics, the deposit formation decreased significantly in both cases, indicating that probiotics avoid or minimize the formation of biofilms. This result is new in the aspect of the DIP system. These waters are treated with more antimicrobial substances than process waters in a paper making process. Especially H₂O₂ may have a strong antimicrobial effect on the microorganisms, but also tensides, NaOH or other chemicals used in the deinking process are well known to influence the growth of microorganisms in a negative way.

In a second step, H₂O₂ was additionally combined with the test waters. Former trials showed that probiotics can resist this antimicrobial substance in the concentration added. The results are comparable to the above.

In conclusion, probiotics help to avoid deposits also in a DIP system with antimicrobial added substances. This can be observed in original water and in water with added H₂O₂. In industrial and cooling waters, a strong reduction of biofilms is observed while adding probiotics. New is the fact that this can be observed in a more antimicrobial water like a dilution water of a dip system.

### Example 3:

### Resistance against H₂O₂

The influence of H₂O₂ on the growth of probiotics was determined using several methods.

### Method 1: Minimal inhibitory concentration; biocide: H₂O₂

**Method:** Transfer the biocide solution (double concentration) into nutrient broth (double concentration), 5ml each, ratio 1:1. Inoculate this growth media with 100µl of inoculum. After incubation under defined conditions a visual growth control should be carried out.
**pH- value:** according to the given nutrient broth system
**Nutrient broth:** CASO broth for bacteria, Sabouraud broth for yeasts and moulds **Incubation:** bacteria up to three days, temperature 30 to 37°C, yeasts and moulds up to 5 days, temperature 25°C.
**Results:** visual control of growth (turbidity), growth control on nutrient agar is necessary
**Microorganisms used in the test:** as indicated in Table 3, below.

Results are shown in Table 3, below.

**Table 3: Results minimal inhibitory concentration**

| **Microorganisms** | **Counts in cfu/ml of liquid culture/ (counts of inoculum in the test) in cfu/ml** | **Minimum inhibitory concentration** |
|---|---|---|
| *Escherichia coli* | 1,3 x 10⁹ (1,3 x 10⁷) | 500ppm |
| *Pseudomonas fluorescens* | 8,6 x 10⁸ (8,6 x 10⁶) | 125ppm |
| *Bacillus subtilis* | 5,3 x 10⁶ (5,4 x 10⁴) | 5000ppm |
| *Saccharomyces cerevisiae* | 6,0 x 10⁶ (6,0 x 10⁵) | 250ppm |
| *Aspergillus niger* | 5,0 x 10⁷ (5,0 x 10⁶) | No inhibition |
| *Probiotics (after growing)* | 4,8 x 10⁸ (2,0 x 10⁸) | 5000ppm |
| *Probiotics (original, directly)* | 5,5 x 10⁸ (5,5 x 10⁶) | 500ppm |
| *Clear filtrate (original)* | 8,0 x 10⁷ (4,0 x 10³) | 500ppm |
| *Dilution water (original)* | 1,2 x 10⁴ (4,0 x 10³) | 1000ppm |

As a result, H₂O₂ is a very effective biocidal substance for bacteria and yeasts. Spore forming bacteria (like *Bacillus* species) can resist higher concentrations of the biocide (5000ppm versus 125-500ppm). Further, probiotics can resist H₂O₂ in higher concentrations when used after a growth period. Probiotics need some time to grow, so antimicrobial substances added in this growing process may be more effective. This can be avoid by repeated dosage of probiotics. Further, probiotics are more resistant to antimicrobial influences caused by oxidative stress. This result was clearly visible in the dilution water of the deinking process compared to a water of a paper machine.

In conclusion, probiotics can withstand the antimicrobial influence of H₂O₂ in higher concentrations than other bacteria tested.

### Method 2: Kill tests with H₂O₂

**Method:** Water samples were used directly for the test. As indicated, the samples were treated with biocide. Measurement (like total aerobic count, probiotics) took place as indicated (performed at different times). The treated samples were inoculated at a temperature of 35 °C.

For the detection of microorganisms, well-established methods were used.

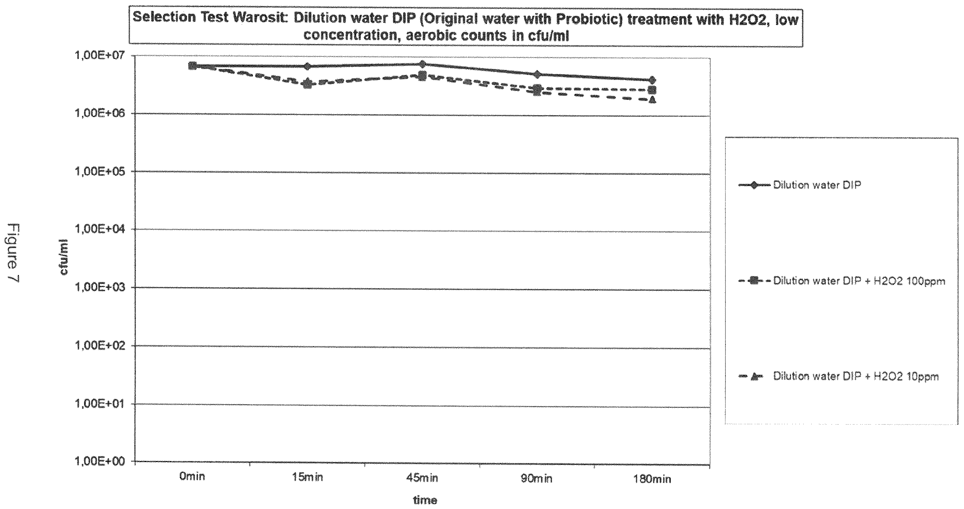

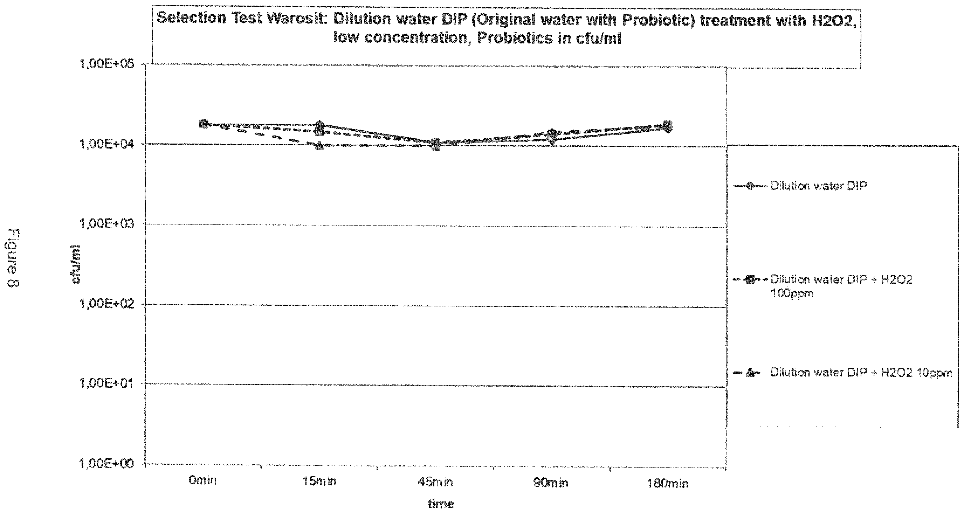

Results for tests with dilution water (original deinking water) and low concentrations of peroxide are shown in Figures 7 and 8. Results in low concentrations of peroxide show that there is a minimal influence on the microbial load of the dilution water treated with probiotics. No influence could be observed on the probiotic themselves (Fig. 8).

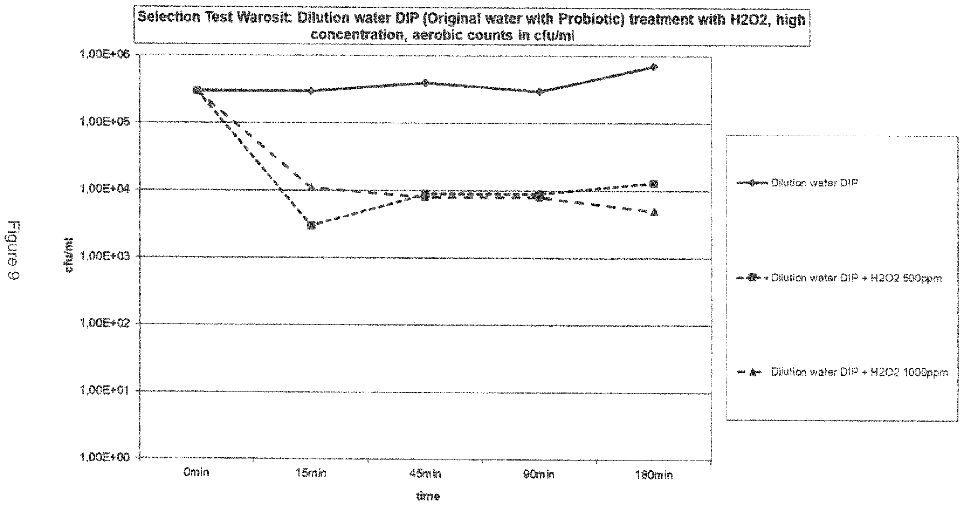

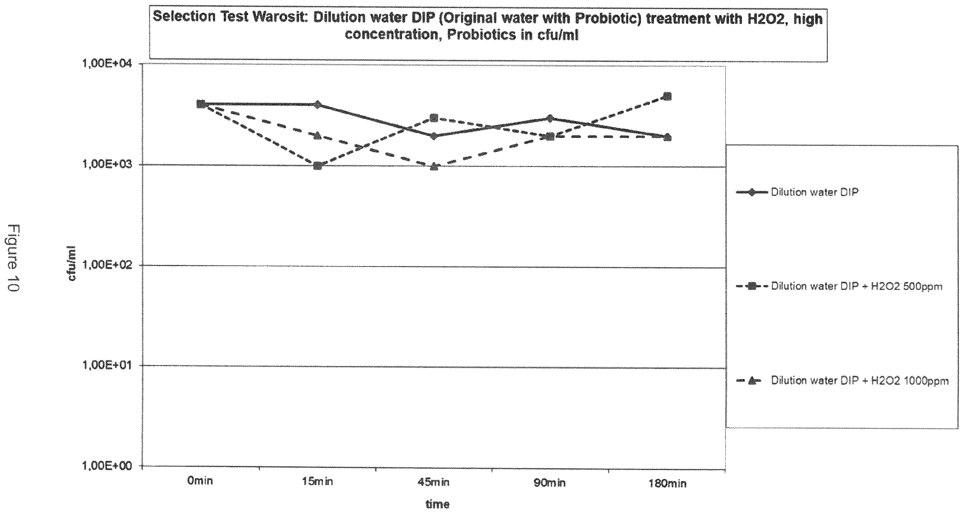

Results for tests with dilution water (original deinking water) and high concentrations of peroxide are shown in Figures 9 and 10. Results in high concentrations of peroxide show that there is a minimal influence on the microbial load of the dilution water treated previously with probiotics. No influence could be observed on the probiotics themselves (Fig. 10).

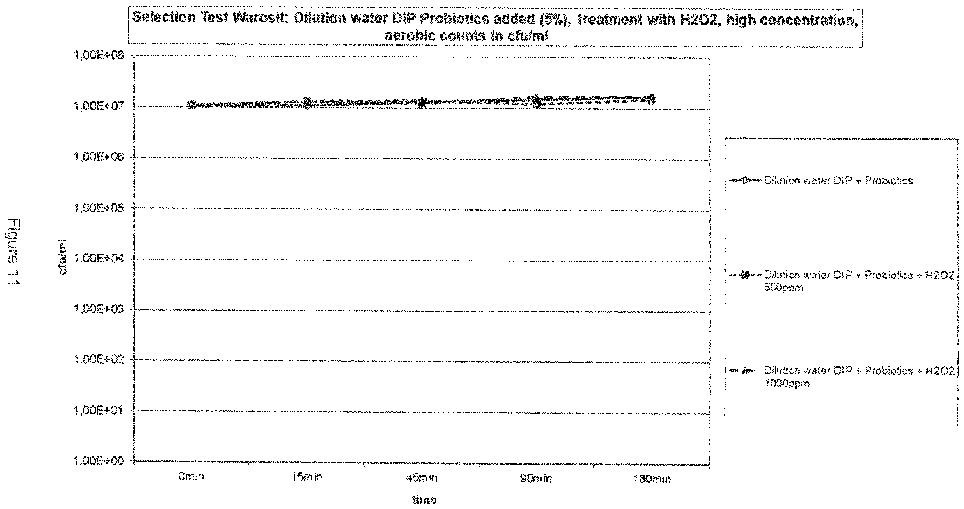

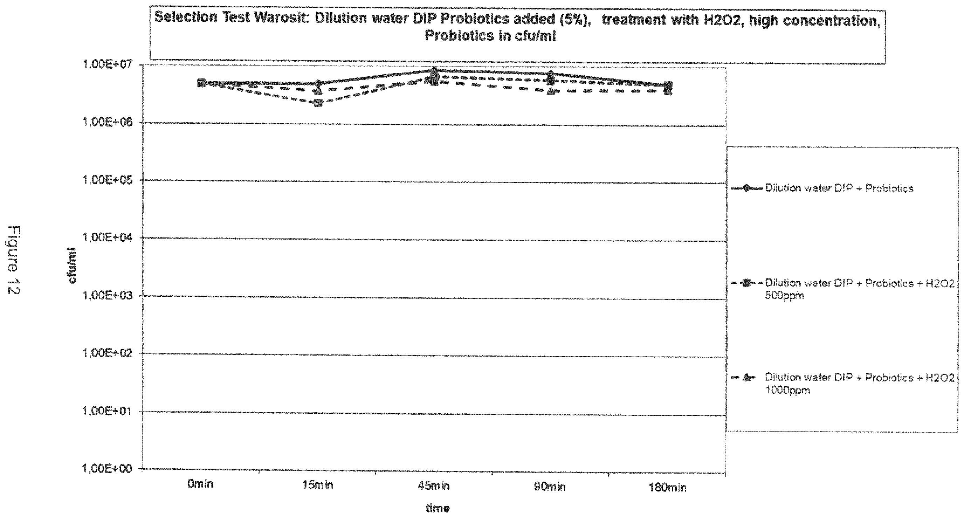

Results for tests with dilution water (deinking) inoculated directly with probiotics and treated with high concentrations of peroxide are shown in Figures 11 and 12. In high concentrations of peroxide and after a direct inoculation with probiotics there is no influence on the aerobic nor "probiotic" counts indicating that these microorganisms can resist the biocide in high concentrations. The counts of aerobic bacteria compared to probiotics in this test indicate that probiotics are the main part of the biomass.

### Method 3: Biochemical oxygen demand (BOD) test with dilution water (deinking water) treated with low concentrations of peroxide

**Method:** Test was carried out with a WTW Test system according the standard procedure recommended by the manufacturer Xylem.

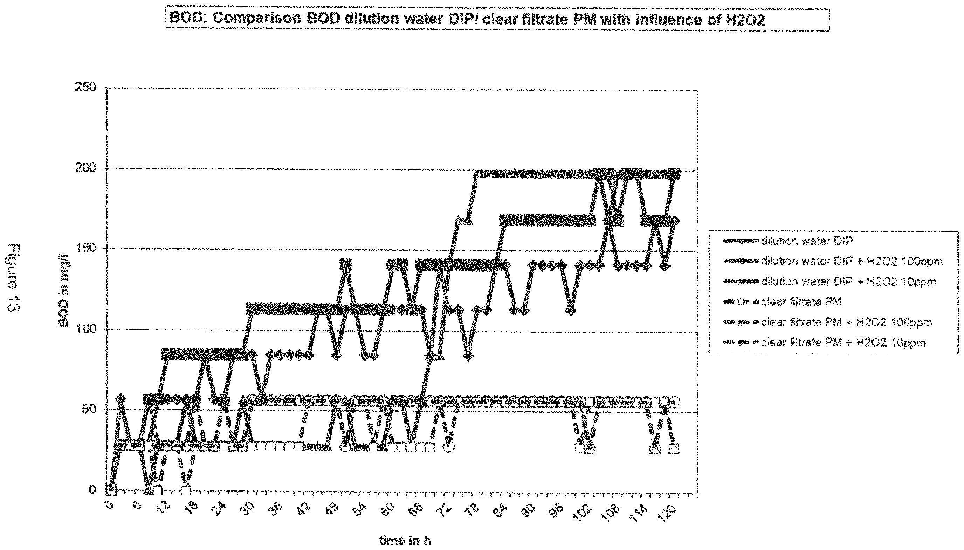

Results are shown in Figure 13. The respiratory activity in the dilution water (original water treated previously with probiotics) was much more visible compared to an untreated clear filtrate of the machine, even under the influence of added peroxide.

In conclusion, probiotics can resist higher concentrations of H₂O₂ than other bacteria. This fact is observed in all tests (minimal inhibitory concentration, kill test, BOD) performed. In the deinking system, high concentrations of H₂O₂ can be reached. That indicates that probiotics can use such an influence to establish their growth and to establish themselves in the system.

### Example 4:

### Stabilisation of pH values

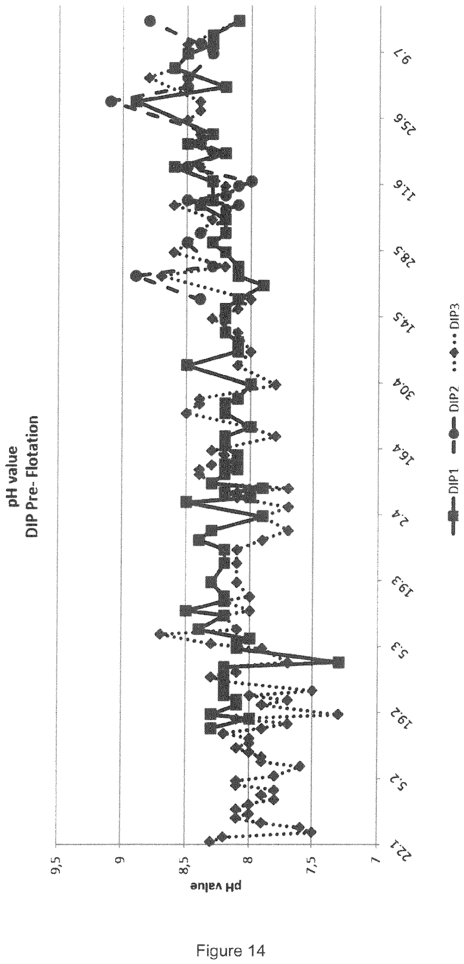

A stabilisation of the pH values, a stabilisation of redox potential values and a reduction in pH variation could be observed during practical field trials, *i.e.,* under practical conditions, in three different DIP plants (Fig. 14).

These findings are in agreement with reduced bacterial deposition on surfaces and reduced biofilm formation.

### Example 5:

### Preincubation

In the following tables the germination number developments are documented in a preliminary incubation at 30 °C within 24h, using different inculation and sugars.

**Table 4: Total counts probiotic (inoculum, 17ml /m³, regular)**

| | **Probiotics in cfu/ml after 1h** | **Probiotics in cfu/ml after 3h** | **Probiotics in cfu/ml after 24h** |
|---|---|---|---|
| **Tap water** | 7,1 x 10³ | 4,5 x 10³ | 4,4 x 10³ |
| **Tap water + Tryptic soy (10%)** | 4,5 x 10³ | 5,7 x 10³ | 4,0 x 10⁶ |
| **Tap water + Molasses (10%)** | 5,5 x 10³ | 3,7 x 10³ | 1,4 x 10⁵ |
| **Tap water + sucrose (10%)** | 5,7 x 10³ | 3,7 x 10³ | 4,0 x 10³ |
| **Tap water + glucose (10%)** | 5,0 x 10³ | 3,7 x 10³ | 5,6 x 10³ |

**Table 5: Total counts Probiotic (inoculum, 170ml/m³)**

| | **Probiotics in cfu/ml after 1h** | **Probiotics in cfu/ml after 3h** | **Probiotics in cfu/ml after 24h** |
|---|---|---|---|
| **Tap water** | 4,0 x 10⁴ | 4,0 x 10⁴ | 4,0 x 10⁴ |
| **Tap water + Tryptic soy (10%)** | 7,0 x 10⁴ | 8,0 x 10⁴ | 2,4 x 10⁷ |
| **Tap water + Molasses (10%)** | 6,0 x 10⁴ | 7,0 x 10⁴ | 2,0 x 10⁶ |
| **Tap water** + **sucrose (10%)** | 7,0 x 10⁴ | 4,0 x 10⁴ | 1,0 x 10⁴ |
| **Tap water + glucose (10%)** | 7,0 x 10⁴ | 5,0 x 10⁴ | 7,0 x 10⁴ |

**Table 6: Total counts Probiotic (inoculum, 1700ml/m³)**

| | **Probiotics in cfu/ml after 1h** | **Probiotics in cfu/ml after 3h** | **Probiotics in cfu/ml after 24h** |
|---|---|---|---|
| **Tap water** | 4,3 x 10⁵ | 4,7 x 10⁵ | 4,9 x 10⁵ |
| **Tap water + Tryptic soy (10%)** | 5,0 x 10⁵ | 5,8 x 10⁵ | 2,3 x 10⁷ |
| **Tap water + Molasses (10%)** | 4,9 x 10⁵ | 5,5 x 10⁵ | 2,0 x 10⁶ |
| **Tap water + sucrose (10%)** | 4,0 x 10⁵ | 5,2 x 10⁵ | 5,0 x 10⁵ |
| **Tap water + glucose (10%)** | 4,8 x 10⁵ | 6,1 x 10⁵ | 5,0 x 10⁵ |

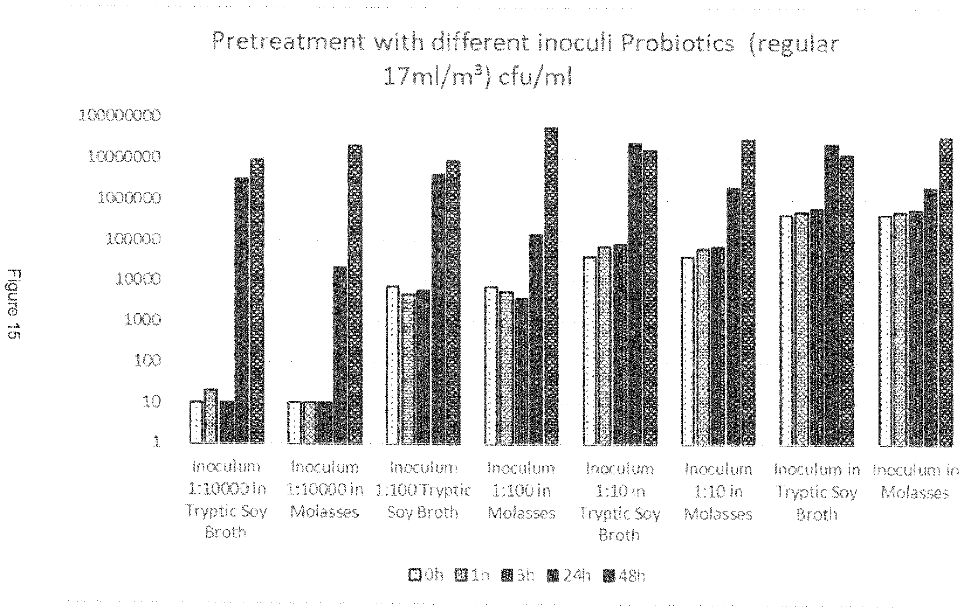

Figure 15 shows a representation of different germ number development within 48h in complex sugar mixtures (Caso Bouillon/ Tryptic soy and molasses), indicating that in particular molasses are suitable and can be easily used in a large scale setting.

The following Table shows the development of the bacterial count and diversity at 30 °C within 7h using different inoculations in sugar mixtures.

**Table 7: Total counts Probiotic (inoculum, 1700ml/m³)**

| | **Probiotics in cfu/ml after 3h** | **Probiotics in cfu/ml after 5h** | **Probiotics in cfu/ml after 7h** | **Morphological differentiation** |
|---|---|---|---|---|
| **Tap water** | 4,1 x 10⁵ | 3,4 x 10⁵ | 4,7 x 10⁵ | **5 different strains** |
| **Tap water + Tryptic soy (10%)** | 5,0 x 10⁵ | 3,3 x 10⁵ | 7,5 x 10⁵ | **4 different strains** |
| **Tap water + Molasses (10%)** | 3,9 x 10⁵ | 3,2 x 10⁵ | 6,0 x 10⁵ | **6 different strains** |
| **Tap water + Tryptic soy (3,33%) + Molasses (6,66%)** | 4,3 x 10⁵ | 3,4 x 10⁵ | 4,8 x 10⁵ | **6 different strains** |

In case of a pre-cultivation on site, higher concentrations (1-50%) are used (approximation to the concentration of the original probiotic mixture).

The following tables show these achieved bacterial counts when the preincubation medium is inoculated with 1 and 5% with the probiotic mixture. Higher inoculation concentrations result in higher bacterial counts at the end of preincubation. However, the increases are comparable to the above data.

**Table 8: Total counts Probiotic (inoculum 1%)**

| | **Probiotics in cfu/ml directly** | **Probiotics in cfu/ml after 3h** | **Probiotics in cfu/ml after 5h** | **Morphological differentiation** |
|---|---|---|---|---|
| **Tap water** | 2,9 x 10⁶ | 3,7 x 10⁶ | 3,7 x 10⁶ | **6 different strains** |
| **Tap water + Tryptic soy (10%)** | 2,9 x 10⁶ | 5,7 x 10⁶ | 3,5 x 10⁶ | **6 different strains** |
| **Tap water + Molasses (10%)** | 2,9 x 10⁶ | 5,4 x 10⁶ | 3,2 x 10⁶ | **6 different strains** |
| **Tap water + Tryptic soy (3,33%) + Molasses (6,66%)** | 2,9 x 10⁶ | 4,0 x 10⁶ | 5,2 x 10⁶ | **6 different strains** |

**Table 9: Total counts Probiotic (inoculum 5%)**

| | **Probiotics in cfu/ml after 1h** | **Probiotics in cfu/ml after 3h** | **Probiotics in cfu/ml after 5h** | **Morphological differentiation** |
|---|---|---|---|---|
| **Tap water** | 1,5 x 10⁷ | 1,9 x 10⁷ | 1,9 x 10⁷ | **6 different strains** |
| **Tap water + Tryptic soy (10%)** | 1,5 x 10⁷ | 1,8 x 10⁷ | 1,4 x 10⁷ | **6 different strains** |
| **Tap water + Molasses (10%)** | 1,5 x 10⁷ | 1,0 x 10⁷ | 2,5 x 10⁷ | **6 different strains** |
| **Tap water + Tryptic soy (3,33%) + Molasses (6,66%)** | 1,5 x 10⁷ | 1,7 x 10⁷ | 3,2 x 10⁷ | **6 different strains** |

Sugar mixtures (CASO Bouillon (tryptic soy broth), molasses) contribute to a stabilisation of probiotics (stabilised cell numbers with constant "biodiversity"). They lead to a faster establishment of the microorganisms in the system, as the microorganisms are already in the vegetative phase.

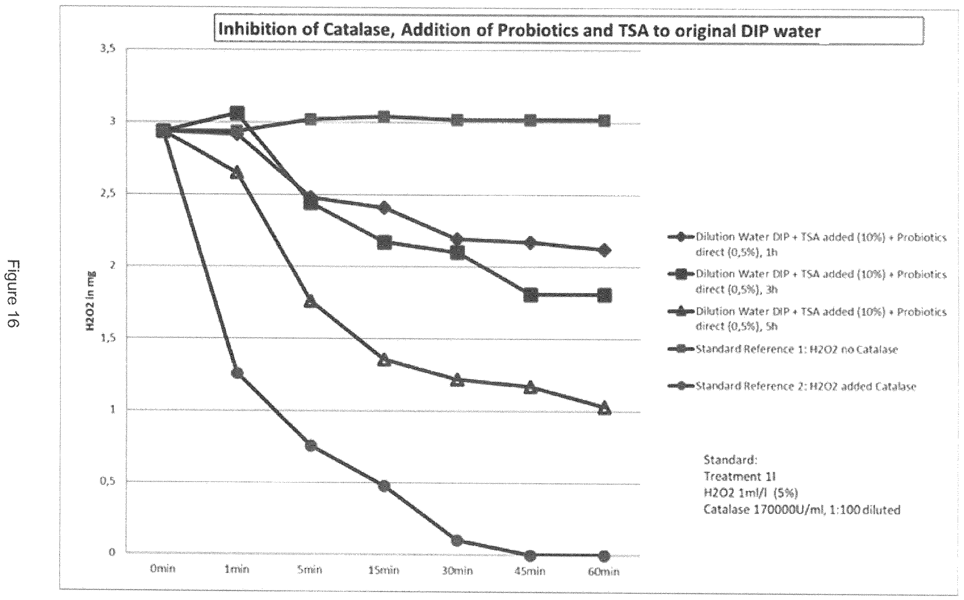

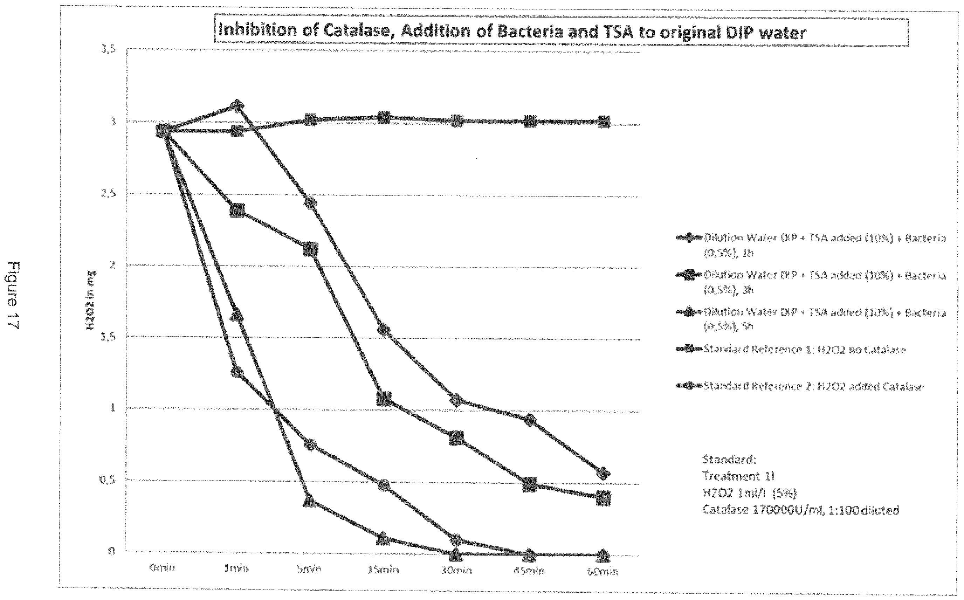

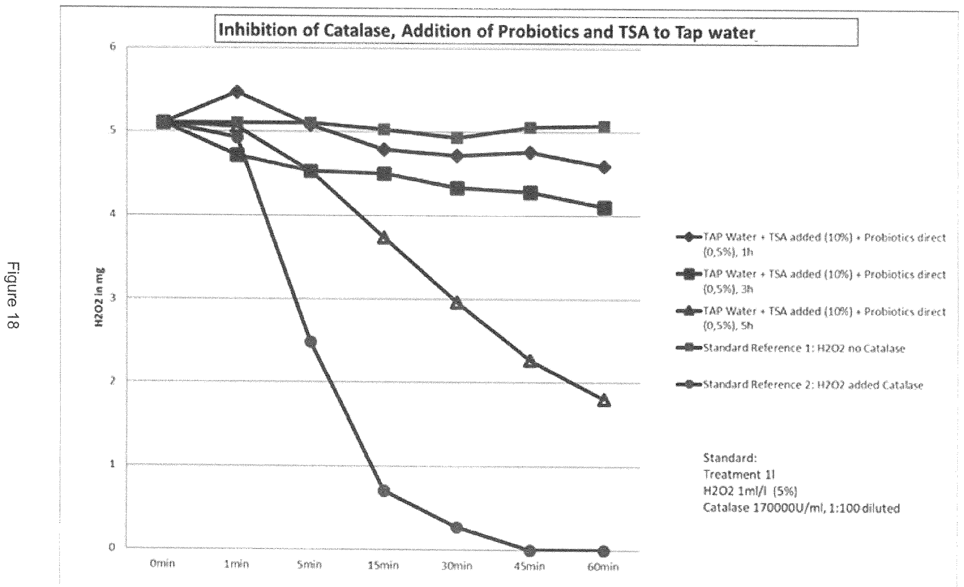

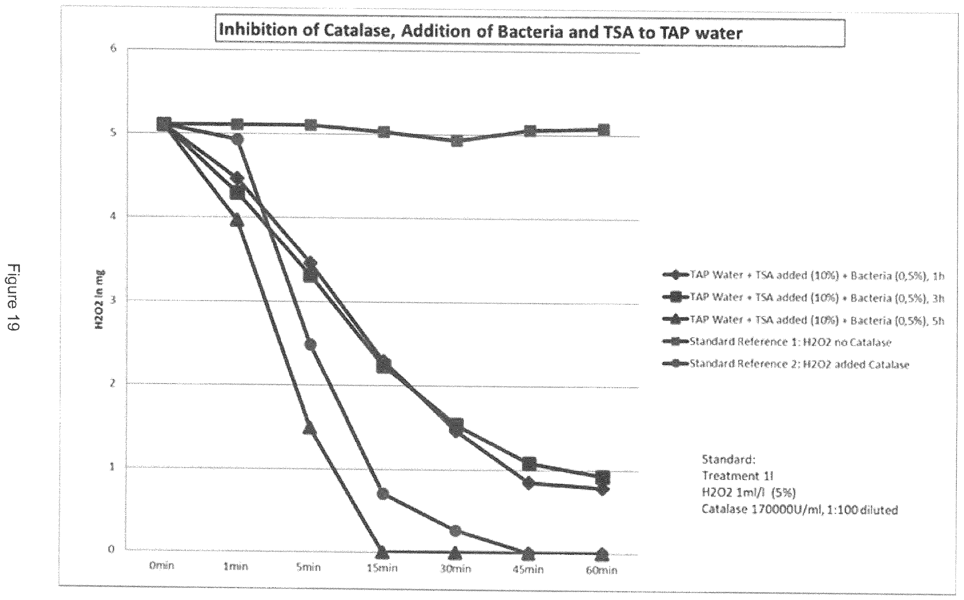

Aerobically living microorganisms form catalase as a protective enzyme against oxygen radicals/oxidative stress. In the data shown in Figures 16 to 19, the formation of catalase of the pre-enriched probiotics was compared with pre-enriched bacterial mixtures. The selected bacteria are a model mixture for a water-bearing system.

As can be taken from the above data, probiotics produce less catalase in the first 5 h from inoculation compared to other bacterial strains, which leads to lower hydrogen peroxide consumption.

## Claims

1. The use of a composition, comprising two or more species of probiotic bacteria, for inhibiting the enzymatic decomposition of hydrogen peroxide (H₂O₂) in a process of deinking recycled fiber pulp, wherein said process uses hydrogen peroxide,
wherein said two or more species of probiotic bacteria are selected from the group consisting of *Bacillus subtilis, Bacillus pumilus, Bacillus licheniformis, Bacillus megaterium* and *Bacillus amyloliquefaciens.*

2. The use according to claim 1, wherein said composition comprises all of *Bacillus subtilis, Bacillus pumilus, Bacillus licheniformis, Bacillus megaterium* and *Bacillus amyloliquefaciens.*

3. The use according to claim 1 or claim 2, wherein said composition comprises one or more further species of probiotic bacteria, selected from the group consisting of species of the genus *Lactobacillus* (*Lactobacillus* spp.), *Lactococcus* spp., *Streptococcus* spp., *Propionibacterium* spp., *Enterococcus* spp., *Bifidobacterium* spp., *Bacillus* spp., *Sporolactobacillus* spp., *Micromonospora* spp., *Micrococcus* spp., *Rhodococcus* spp., *Escherichia* spp., and *Pseudomonas* spp..

4. The use according to claim 3, wherein the one or more further species of probiotic bacteria is selected from the group consisting of *Lactobacillus acidophilus, Lactobacillus plantarum, Lactobacillus salivarius, Lactobacillus delbrueckii, Lactobacillus rhamnosus, Lactobacillus bulgaricus, Lactobacillus crispatus, Lactobacillus gasseri, Lactobacillus jensenii; Lactococcus lactis* (subsp. *lactis*); *Streptococcus thermophilus; Propionibacterium freudenreichii (subsp. shermanii); Enterococcus faecium, Enterococcus thermophilus; Bifidobacterium longum, Bifidobacterium infantis, Bifidobacterium bifidum; Bacillus coagulans, Bacillus thermophilus, Bacillus laterosporus, Bacillus pasteurii, Bacillus laevolacticus, Bacillus mycoides, Bacillus lentus, Bacillus cereus Bacillus circulans; Escherichia coli; Pseudomonas fluorescens,* and *Pseudomonas aeruginosa.*

5. The use according to claim 1 or claim 2, wherein said composition does not comprise any other species of probiotic bacteria.

6. The use according to any one of claims 1 to 5, wherein bacteria of the genus *Bacillus* and/or the genus *Sporolactobacillus* are present in the form of endospores.

7. The use according to any one of claims 1 to 6, wherein said composition comprises the probiotic bacteria in an amount of 10⁶ to 10⁹ cfu per gram of the composition.

8. The use according to any one of claims 1 to 7, wherein said composition further comprises one or more prebiotic sugar(s), preferably selected from the group consisting of galacto-oligosaccharides having 3 to 9 monosaccharide units and fructo-oligosaccharides having 3 to 9 monosaccharide units, preferably wherein the prebiotic sugar is inulin.

9. The use according to claim 8, wherein the prebiotic sugar is present in said composition in an amount of 0.01 to 10% (w/w).

10. The use according to any one of claims 1 to 9, wherein said composition is preincubated prior to its addition to the process of deinking recycled fiber pulp.

11. The use according to any one of claims 1 to 10, wherein said process of deinking recycled fiber pulp is a flotation deinking process.

12. The use according to any one of claims 1 to 11, wherein said deinking process is performed in a deinking solution comprising
(a) sodium hydroxide (NaOH),
(b) hydrogen peroxide (H₂O₂), and
(c) soluble glass, and
(d) optionally at least one of (i) one or more fatty acids and/or soaps, and (ii) one or more anionic and/or non-ionic surfactants.

13. The use according to claim 12, wherein said deinking solution comprises
(a) 0.2 to 1.5% (v/v) NaOH,
(b) 0.05 to 1% (v/v) H₂O₂,
(c) 0.1 to 2% (v/v) soluble glass, and
(d) at least one of (i) 0.1 to 0.8% (v/v) of one or more fatty acids and/or soaps, and (ii) 0.005 to 0.1% (v/v) of one or more anionic and/or non-ionic surfactants.

14. A process of deinking recycled fiber pulp, comprising the step of supplying a composition, comprising two or more species of probiotic bacteria, to the process solution prior to the addition of hydrogen peroxide (H₂O₂) to said process solution, wherein said two or more species of probiotic bacteria are selected from the group consisting of *Bacillus subtilis, Bacillus pumilus, Bacillus licheniformis, Bacillus megaterium* and *Bacillus amyloliquefaciens.*

15. The process according to claim 14, wherein said composition is as defined in any one of claims 2 to 10 and/or wherein said process is as defined in any one of claims 11 to 13.

## Patentansprüche

1. Verwendung einer Zusammensetzung, die zwei oder mehr Spezies von probiotischen Bakterien umfasst, zum Hemmen der enzymatischen Zersetzung von Wasserstoffperoxid (H₂O₂) in einem Verfahren zur Druckfarbenentfernung von rezyklierter Faserpulpe, wobei das Verfahren Wasserstoffperoxid nutzt,
wobei die zwei oder mehr Spezies von probiotischen Bakterien aus der Gruppe, bestehend aus *Bacillus subtilis, Bacillus pumilus, Bacillus licheniformis, Bacillus megaterium* und *Bacillus amyloliquefaciens,* ausgewählt sind.

2. Verwendung nach Anspruch 1, wobei die Zusammensetzung alle von *Bacillus subtilis, Bacillus pumilus, Bacillus licheniformis, Bacillus megaterium* und *Bacillus amyloliquefaciens* umfasst.

3. Verwendung nach Anspruch 1 oder Anspruch 2, wobei die Zusammensetzung eine oder mehr weitere Spezies von probiotischen Bakterien, ausgewählt aus der Gruppe, bestehend aus Spezies der Gattung *Lactobacillus* (*Lactobacillus* spp.), *Lactococcus* spp., *Streptococcus* spp., *Propionibacterium* spp., *Enterococcus* spp., *Bifidobacterium* spp., *Bacillus* spp., *Sporolactobacillus* spp., *Micromonospora* spp., *Micrococcus* spp., *Rhodococcus* spp., *Escherichia* spp. und *Pseudomonas* spp., umfasst.

4. Verwendung nach Anspruch 3, wobei die eine oder mehr weitere(n) Spezies von probiotischen Bakterien aus der Gruppe, bestehend aus *Lactobacillus acidophilus, Lactobacillus plantarum, Lactobacillus salivarius, Lactobacillus delbrueckii, Lactobacillus rhamnosus, Lactobacillus bulgaricus, Lactobacillus crispatus, Lactobacillus gasseri, Lactobacillus jensenii; Lactococcus lactis* (subsp. *lactis*); *Streptococcus thermophilus; Propionibacterium freudenreichii* (subsp. *shermanii*); *Enterococcus faecium, Enterococcus thermophilus; Bifidobacterium longum, Bifidobacterium infantis, Bifidobacterium bifidum; Bacillus coagulans, Bacillus thermophilus, Bacillus laterosporus, Bacillus pasteurii, Bacillus laevolacticus, Bacillus mycoides, Bacillus lentus, Bacillus cereus, Bacillus circulans; Escherichia coli; Pseudomonas fluorescens* und *Pseudomonas aeruginosa,* ausgewählt ist oder sind.

5. Verwendung nach Anspruch 1 oder Anspruch 2, wobei die Zusammensetzung keinerlei weitere Spezies von probiotischen Bakterien umfasst.

6. Verwendung nach einem der Ansprüche 1 bis 5, wobei Bakterien der Gattung *Bacillus* und/oder der Gattung *Sporolactobacillus* in der Form von Endosporen vorliegen.

7. Verwendung nach einem der Ansprüche 1 bis 6, wobei die Zusammensetzung die probiotischen Bakterien in einer Menge von 10⁶ bis 10⁹ cfu (koloniebildenden Einheiten) pro Gramm der Zusammensetzung umfasst.

8. Verwendung nach einem der Ansprüche 1 bis 7, wobei die Zusammensetzung ferner einen oder mehr präbiotische(n) Zucker umfasst, vorzugsweise ausgewählt aus der Gruppe, bestehend aus Galakto-Oligosacchariden mit 3 bis 9 Monosaccharid-Einheiten und Frukto-Oligosacchariden mit 3 bis 9 Monosaccharid-Einheiten, wobei der präbiotische Zucker vorzugsweise Inulin ist.

9. Verwendung nach Anspruch 8, wobei der präbiotische Zucker in der Zusammensetzung in einer Menge von 0,01 bis 10 % (Gew./Gew.) vorliegt.

10. Verwendung nach einem der Ansprüche 1 bis 9, wobei die Zusammensetzung vor deren Zugabe zu dem Verfahren zur Druckfarbenentfernung von rezyklierter Faserpulpe vorinkubiert wird.

11. Verwendung nach einem der Ansprüche 1 bis 10, wobei das Verfahren zur Druckfarbenentfernung von rezyklierter Faserpulpe ein Flotationsdruckfarbenentfernungsverfahren ist.

12. Verwendung nach einem der Ansprüche 1 bis 11, wobei das Druckfarbenentfernungsverfahren in einer Druckfarbenentfernungslösung durchgeführt wird, die
(a) Natriumhydroxid (NaOH),
(b) Wasserstoffperoxid (H₂O₂) und
(c) lösliches Glas und
(d) gegebenenfalls mindestens eines von (i) einer oder mehr Fettsäure(n) und/oder Seife(n) und (ii) einem oder mehr anionischen und/oder nicht-ionischen grenzflächenaktiven Mittel(n) umfasst.

13. Verwendung nach Anspruch 12, wobei die Druckfarbenentfernungslösung
(a) 0,2 bis 1,5 % (Vol./Vol.) NaOH,
(b) 0,05 bis 1 % (Vol./Vol.) H₂O₂,
(c) 0,1 bis 2 % (VoI.Nol.) lösliches Glas und
(d) mindestens eines von (i) 0,1 bis 0,8 % (Vol./Vol.) von einer oder mehr Fettsäure(n) und/oder Seife(n) und (ii) 0,005 bis 0,1 % (VoI.Nol.) von einem oder mehr anionischen und/oder nicht-ionischen grenzflächenaktiven Mittel(n) umfasst.

14. Verfahren zur Druckfarbenentfernung von rezyklierter Faserpulpe, umfassend den Schritt des Zuführens einer Zusammensetzung, die zwei oder mehr Spezies von probiotischen Bakterien umfasst, zu der Verfahrenslösung vor dem Zusetzen von Wasserstoffperoxid (H₂O₂) zu der Verfahrenslösung, wobei die zwei oder mehr Spezies von probiotischen Bakterien aus der Gruppe, bestehend aus *Bacillus subtilis, Bacillus pumilus, Bacillus licheniformis, Bacillus megaterium* und *Bacillus amyloliquefaciens,* ausgewählt sind.

15. Verfahren nach Anspruch 14, wobei die Zusammensetzung derart ist, wie es in einem der Ansprüche 2 bis 10 festgelegt ist, und/oder wobei das Verfahren derart ist, wie es in einem der Ansprüche 11 bis 13 festgelegt ist.

## Revendications

1. Utilisation d'une composition, comprenant deux ou plusieurs espèces de bactérie probiotique, pour inhiber la décomposition enzymatique du peroxyde d'hydrogène (H₂O₂) dans un procédé de désencrage d'une pâte de fibres recyclée, dans laquelle ledit procédé utilise le peroxyde d'hydrogène,
dans laquelle lesdites deux ou plusieurs espèces de bactérie probiotique sont choisies parmi le groupe consistant en *Bacillus subtilis, Bacillus pumilus, Bacillus licheniformis, Bacillus megaterium* et *Bacillus amyloliquefaciens.*

2. Utilisation selon la revendication 1, dans laquelle ladite composition comprend toutes les espèces suivantes : *Bacillus subtilis, Bacillus pumilus, Bacillus licheniformis, Bacillus megaterium* et *Bacillus amyloliquefaciens.*

3. Utilisation selon la revendication 1 ou 2, dans laquelle la composition comprend une ou plusieurs espèces supplémentaires de bactérie probiotique, choisies parmi le groupe consistant en les espèces du genre *Lactobacillus* (*Lactobacillus* spp.), *Lactococcus* spp., *Streptococcus* spp., *Propionibacterium* spp., *Enterococcus* spp., *Bifidobacterium* spp., *Bacillus* spp., *Sporolactobacillus* spp., *Micromonospora* spp., *Micrococcus* spp., *Rhodococcus* spp., *Escherichia* spp., et *Pseudomonas* spp.

4. Utilisation selon la revendication 3, dans laquelle la ou les espèces supplémentaires de bactérie probiotique sont choisies parmi le groupe consistant en *Lactobacillus acidophilus, Lactobacillus plantarum, Lactobacillus salivarius, Lactobacillus delbrueckii, Lactobacillus rhamnosus, Lactobacillus bulgaricus, Lactobacillus crispatus, Lactobacillus gasseri, Lactobacillus jensenii ; Lactococcus lactis (*subsp. *lactis) ; Streptococcus thermophilis ; Propionibacterium freudenreichii (*subsp. *shermanii) ; Enterococcus faecium, Enterococcus thermophilus ; Bifidobacterium longum, Bifidobacterium infantis, Bifidobacterium bifidum ; Bacillus coagulans, Bacillus thermophilus, Bacillus laterosporus, Bacillus pasteurii, Bacillus laevolacticus, Bacillus mycoides, Bacillus lentus, Bacillus cereus, Bacillus circulans ; Escherichia coli ; Pseudomonas fluorescens* et *Pseudomonas aeruginosa.*

5. Utilisation selon la revendication 1 ou 2, dans laquelle ladite composition ne comprend pas d'autre espèce de bactérie probiotique.

6. Utilisation selon l'une quelconque des revendications 1 à 5, dans laquelle des bactéries du genre *Bacillus* et/ou du genre *Sporolactobacillus* sont présentes sous forme d'endospores.

7. Utilisation selon l'une quelconque des revendications 1 à 6, dans laquelle ladite composition comprend les bactéries probiotiques en une quantité allant de 10⁶ à 10⁹ ufc par gramme de composition.

8. Utilisation selon l'une quelconque des revendications 1 à 7, dans laquelle ladite composition comprend en outre, un ou plusieurs sucres prébiotiques, de préférence choisis parmi le groupe consistant en des galacto-oligosaccharides ayant 3 à 9 unités monosaccharide et des fructo-oligosaccharides ayant 3 à 9 unités monosccharide, de préférence où le sucre prébiotique est l'inuline.

9. Utilisation selon la revendication 8, dans laquelle le sucre prébiotique est présent dans ladite composition en une quantité allant de 0,01 à 10% (p/p).

10. Utilisation selon l'une quelconque des revendications 1 à 9, dans laquelle ladite composition est pré-incubée avant son addition au procédé de désencrage de pâte de fibres recyclée.

11. Utilisation selon l'une quelconque des revendications 1 à 10, dans laquelle ledit procédé de désencrage de pâte de fibres recyclée est un procédé de désencrage par flottation.

12. Utilisation selon l'une quelconque des revendications 1 à 11, dans laquelle ledit procédé de désencrage est réalisé dans une solution de désencrage comprenant :
(a) de l'hydroxyde de sodium (NaOH),
(b) du peroxyde d'hydrogène (H₂O₂) ;
(c) du verre soluble, et
(d) optionnellement, au moins l'un parmi (i) un ou plusieurs acides gras et/ou savons, et (ii) un ou plusieurs tensioactifs anioniques et/ou non ioniques.

13. Utilisation selon la revendication 12, dans laquelle la solution de désencrage comprend :
(a) 0,2 à 1,5% (v/v) de NaOH,
(b) 0,05 à 1% (v/v) de H₂O₂,
(c) 0,1 à 2% (v/v) de verre soluble, et
(d) au moins l'un parmi (i) 0,1 à 0,8% (v/v) d'un ou de plusieurs acides gras et/ou savons, et (ii) 0,005 à 0,1% (v/v) d'un ou plusieurs tensioactifs anioniques et/ou non ioniques.

14. Procédé de désencrage de pâte de fibres recyclée, comprenant l'étape d'ajout d'une composition, comprenant deux ou plusieurs espèces de bactérie probiotique, à la solution du procédé avant l'addition de peroxyde d'hydrogène (H₂O₂) à ladite solution de procédé, dans lequel lesdites deux ou plusieurs espèces de bactérie probiotique sont choisies parmi le groupe consistant en *Bacillus subtilis, Bacillus pumilus, Bacillus licheniformis, Bacillus megaterium* et *Bacillus amyloliquefaciens.*

15. Procédé selon la revendication 14, dans lequel ladite composition est telle que définie dans l'une quelconque des revendications 2 à 10 et/ou dans lequel ledit procédé est tel que défini dans l'une quelconque des revendications 11 à 13.
